# NEUE EUROPÄISCHE PATENTSCHRIFT

(11) **EP 1 436 775 B2**
(45) Veröffentlichungstag und Bekanntmachung des Hinweises auf die Entscheidung über den Einspruch: **23.06.2010**
(45) Hinweis auf die Patenterteilung: 17.05.2006
(21) Anmeldenummer: 02782828.4
(22) Anmeldetag: 04.10.2002
(51) Int. Cl.: G06K 19/06, B42D 15/10, G07D 7/02, G07D 7/12

(54) **GEDRUCKTE, MASCHINENLESBARE CODIERUNG, DOKUMENT MIT EINER SOLCHEN CODIERUNG UND VERFAHREN ZUR HERSTELLUNG DER CODIERUNG UND DES DOKUMENTS**
PRINTED, MACHINE-READABLE CODE, DOCUMENT PROVIDED WITH A CODE OF THIS TYPE AND A METHOD FOR PRODUCING SAID CODE AND DOCUMENT
CODAGE IMPRIME LISIBLE PAR UNE MACHINE, DOCUMENT DOTE D'UN TEL CODAGE ET PROCEDE POUR REALISER CE CODAGE ET CE DOCUMENT

(30) Priorität: 08.10.2001 DE 10149463
(43) Veröffentlichungstag der Anmeldung: 14.07.2004
(73) Patentinhaber: Giesecke & Devrient GmbH, 81677 München (DE)
(72) Erfinder: DEPTA, Georg, 83022 Rosenheim (DE)
(74) Vertreter: Klunker . Schmitt-Nilson . Hirsch
(86) Internationale Anmeldenummer: PCT/EP2002/011141
(87) Internationale Veröffentlichungsnummer: WO 2003/032242

(56) Entgegenhaltungen:
- EP-A- 0 031 525
- EP-A- 0 961 256
- DE-A- 10 015 097
- DE-A- 19 812 812
- US-A- 3 599 153
- US-A- 4 506 916
- US-B1- 6 220 333

## Beschreibung

Die Erfindung betrifft eine gedruckte, maschinenlesbare Codierung aus lumineszierender Druckfarbe, ein Wert- oder Sicherheitsdokument mit einer solchen Codierung und Verfahren zur Herstellung der Codierung und zur Herstellung des Dokuments.

Gedruckte Codierungen finden beispielsweise im Zusammenhang mit Ausweisen, Pässen, Warensicherheitsetiketten, Banknoten, Schecks, Gutscheinen und anderen Wert- oder Sicherheitsdokumenten als Echtheitsmerkmal und/oder Identifikationsmerkmal Anwendung.

Aus der DE-OS 1 524 714 ist eine derartige Codierung bekannt. Die dort beschriebene Codierung wird mittels Druckstempeln erzeugt, indem lumineszierendes Material nach Art einer mechanischen Schreibmaschine von einem Farbträger auf einen papierenen Informationsträger lokal übertragen wird. Die Codierung kann Codierungsbereiche besitzen, die sich in ihren Lumineszenzeigenschaften dadurch voneinander unterscheiden, dass sie mit unterschiedlichen lumineszierenden Materialien gedruckt sind und somit in unterschiedlichen Spektralbereichen lumineszieren. Einzelne Codierungsbereiche können auch mehrere aufeinander gedruckte Schichten aus unterschiedlichen Materialien besitzen, so dass die Codierungsbereiche je nach der verwendeten Anregungsstrahlung ein unterschiedliches Erscheinungsbild erzeugen.

Die Herstellung der vorbeschriebenen Codierung ist aufgrund der Verwendung mehrerer unterschiedlicher Druckfarben aufwändig, und entsprechend komplex sind die dafür erforderlichen Druckmaschinen. Die Variationsmöglichkeiten für die Codierung werden durch die Anzahl der verfügbaren Druckfarben begrenzt. Außerdem erfordert eine passergenaue Ausrichtung der einzelnen Codierungsbereiche eine besonders aufwändige Druckmechanik. Auch die Wiederholgenauigkeit der erzeugten Codierungen hängt von der Qualität der Druckmechanik ab. Zum Bedrucken einer hohen Stückzahl von Informationsträgern ist das Verfahren ungeeignet, da es vergleichsweise langsam ist.

DE-A-19812812 offenbart elektrisch leitende Farben mit unterschiedlichen Leitfähigkeiten und Farbtönen, wobei die Farben in unterschiedlicher Farbdicke aufgetragen werden, um so aus der unterschiedlichen Leitfähigkeit verschiedene Kodierungen zu erhalten. DE-A-10015097 offenbart die Darstellung von Informationen in einer kontinuierlich bedruckten Fläche durch gezielte Variation der Farbschichtdicke, wobei ein Datenträger im Stichtiefdruckverfahren bedruckt wird.

Aufgabe der vorliegenden Erfindung ist es, eine Codierung vorzuschlagen, die auch bei hohen Stückzahlen ohne größeren technischen Aufwand und mit größtmöglicher Wiederholgenauigkeit erzeugbar ist und bei der einzelne Codierungsbereiche immer exakt zueinander ausgerichtet sind, so dass sie klar voneinander unterscheidbar sind. Darüber hinaus besteht die Aufgabe darin, ein Wert- oder Sicherheitsdokument mit einer entsprechenden Codierung sowie ein Verfahren zur Herstellung der Codierung und ein Verfahren zur Herstellung des Dokuments vorzuschlagen.

Diese Aufgaben werden durch die Codierung, das Dokument und dem Verfahren mit den Merkmalen der unabhängigen Patentansprüche gelöst. Die Unteransprüche bezeichnen vorteilhafte Ausgestaltungen und Weiterbildungen der Erfindung.

Erfindungsgemäß wird die Codierung im Stichtiefdruckverfahren erzeugt. Abgesehen davon, dass sich einzelne Codierungsbereiche durch ihre Längen- und Breitenabmessungen sowie durch ihre Beabstandung zueinander voneinander unterscheiden können, ist erfindungsgemäß vorgesehen, dass sich einzelne Codierungsbereiche durch ihre Farbschichtdicke voneinander unterscheiden. Unterschiedliche Farbschichtdicken lassen sich im Stahltiefdruckverfahren erzeugen, indem die verwendete Druckplatte entsprechend unterschiedlich tief graviert ist.

Wesentlich für die Erfindung ist des Weiteren, dass die Druckfarbe der unterschiedlich dick gedruckten Codierungsbereiche maschinell detektierbare Substanzen enthält, so dass die Signalintensität mit zunehmender Farbschichtdicke steigt oder abnimmt. Dadurch wird es möglich, unter Verwendung ein und derselben maschinell detektierbaren Substanz allein durch Variation der Farbschichtdicke ein Codierungsmerkmal zu schaffen, welches maschinell auswertbar ist.

Erfindungsgemäß handelt es sich bei den maschinell detektierbaren Substanzen um lumineszierende Substanzen, da diese Materialien berührungslos detektierbar sind. Beim Detektieren tritt somit weder ein Verschleiß des codierten Dokuments noch ein Verschleiß des Detektors auf, wobei letzterem Aspekt insbesondere bei der maschinellen Prüfung von Banknoten besondere Bedeutung zukommt, die in extrem hohen Stückzahlen geprüft werden. Ein häufiges Prüfen der Dokumente würde darüber hinaus bei berührender Prüfung zu Schleifspuren auf dem Dokument führen. Die Messspur würde dadurch sichtbar und die Lage der ansonsten visuell möglicherweise unsichtbaren Codierung enttarnt. Lumineszierende Materialien sind auch deshalb besonders als Codierungsmaterialien geeignet, weil sie den Druckfarben beispielsweise als Partikel beigemischt werden können, ohne die Farbwirkung der Druckfarben nennenswert zu beeinflussen. Vielmehr bleibt die farbliche Brillanz der Druckfarben erhalten, wenn lumineszenzfähige Merkmalsstoffe keine oder nur eine geringe Eigenfarbe aufweisen. Darüber hinaus besitzen viele lumineszierende Substanzen die positive Eigenschaft, dass ihre Lumineszenzfähigkeit über lange Zeit unverändert erhalten bleibt und sich durch äußere Einflüsse weder verändern noch löschen lässt.

Die berührungslose Messung einer lumineszierenden Codierung erfolgt in üblicher Weise mittels einer auf die Codierung gerichteten Anregungsstrahlung und einem für die Lumineszenzstrahlung empfindlichen Strahlungsdetektor, wobei sich das Messsignal in dem Maße ändert, wie sich die Strahlungsintensität der Codierung mit der Farbschichtdicke ändert.

Gegenüber der eingangs beschriebenen Codierung mit aus unterschiedlichen Druckfarben bestehenden Codierungsbereichen bietet die Erfindung den Vorteil, dass lediglich eine maschinenlesbare Substanz zur Erzeugung der Codierung erforderlich ist. Dadurch wird sowohl die Herstellung als auch die Prüfung der Codierung einfacher, da immer nur ein definierter Parameter zu prüfen ist, nämlich die Strahlungsintensität einer einzigen Wellenlänge im Falle einer lumineszierenden Codierung. Das schließt nicht aus, dass innerhalb einer Codierung Druckfarben mit unterschiedlichen Lumineszenzeigenschaften eingesetzt werden können, so dass je nach Wellenlänge der Anregungsstrahlung beispielsweise unterschiedliche Bereiche der Codierung ansprechen und gegebenenfalls sichtbar werden.

Als lumineszierende Druckfarben kommen dementsprechend photolumineszierende Farben in Betracht, insbesondere solche mit fluoreszierenden Substanzen, die also praktisch nur während ihrer Erregung lumineszieren, und solche mit phosphoreszierenden Substanzen, die auch noch nach Aufhören der Erregung für eine gewisse Zeit nachleuchten.

Die Variation der Farbschichtdicke im Stichtiefdruckverfahren erfolgt über die Tiefe der Gravur der für das Stichtiefdruckverfahren verwendeten Druckplatten. Der vollständige Code kann somit in eine einzige Platte graviert werden, so dass die einzelnen Codierungsbereiche für alle mit der Platte gedruckten Codierungen exakt dieselbe relative Lage zueinander einnehmen. Die Codierungen sind somit nicht nur in einem einzigen Druckdurchgang herstellbar und exakt wiederholbar, sondern lassen sich ohne größeren technischen Aufwand auch in hohen Stückzahlen erzeugen. Da sich unterschiedliche Codierungsbereiche nicht überschneiden können, sind alle Codierungsbereiche zuverlässig voneinander differenzierbar. Abgesehen von einer Variation der Farbschichtdicke können sich die einzelnen Codierungsbereiche durch ihre Abmessungen und ihre Beabstandung zueinander unterscheiden. Auf diese Weise lässt sich eine nahezu unbegrenzte Anzahl unterschiedlicher Codierungen schaffen.

Vorzugsweise gehen die Farbschichtdicken von aneinander grenzenden Codierungsbereichen nicht ineinander über, sondern durchlaufen im Bereich der Grenzlinie zwischen den Codierungsbereichen ein Minimum. Dadurch lassen sich die Codierungsbereiche klar voneinander trennen. Der dünne Trennsteg zwischen den angrenzenden Codierungsbereichen ist so schmal, dass er visuell nicht wahrnehmbar ist. Das hat zur Folge, dass aneinander grenzende Codierungsbereiche zwar visuell nicht auseinander zu halten sind, wenn beide Bereiche mit derselben, deckenden Druckfarbe gedruckt sind, dass die Bereiche aufgrund unterschiedlicher Lumineszenzintensitäten exakt voneinander zu unterscheiden sind.

In der WO 00/20216 ist beschrieben, wie unmittelbar aneinander grenzende, nicht ineinander laufende und klar voneinander abgegrenzte Farbflächen mit unterschiedlicher Schichtdicke im Stichtiefdruckverfahren erzeugbar sind. Demnach werden zur Erzeugung aneinander grenzender Farbflächen die den Farbflächen auf der Druckplatte zugeordneten Gravurbereiche durch eine Trennkante voneinander getrennt, wobei die Trennkante in Höhe der Druckplattenoberfläche spitz zuläuft. Aneinander grenzende Farbflächen von derart bedruckten Dokumenten durchlaufen im Grenzbereich ein Minimum der Farbschichtdicke. Die Grenzlinie ist so fein, dass sie nur mit einer Lupe erkennbar ist. Die zur Erzeugung solcher aneinander grenzender Farbflächen notwendigen Druckplatten werden mit einem rotierenden Stichel graviert, der vorzugsweise einen Flankenwinkel entsprechend dem zu erzeugenden Flankenwinkel der Trennkante besitzt. Die Gravurbereiche werden somit in die Gravurplatte gefräst. Mit herkömmlichen Ätzverfahren lassen sich solche präzisen Gravurstrukturen nicht erzeugen.

Darüber hinaus ist es möglich, großflächige Codierungsbereiche im Stichtiefdruckverfahren zu erzeugen, indem der jeweils zugehörige Bereich der Gravurplatte in Teilbereiche aufgeteilt wird, die durch in den Gravuren liegende Trennstege voneinander getrennt sind. Die Trennstege können entweder in Höhe der Druckplattenoberfläche spitz zulaufen oder ein Muster auf dem Grund des gravierten Bereichs bilden, wobei sie als "Farbfang" für die Druckfarbe dienen. In jedem Falle weist die auf das Dokument aufgedruckte Druckfarbschicht eine Oberflächenfeinstruktur auf, die ohne Lupe visuell kaum erkennbar ist. Der Betrachter hat somit den Eindruck eines gleichmäßigen, großflächigen Farbaufdrucks. Die Herstellung solcher Gravurplatten und damit bedruckte Dokumente sind in der WO 00/20217 beschrieben. Mit anderen Gravurtechniken ist es nicht möglich, Stichtiefdruckplatten für größere Farbflächen mit gleichmäßiger Farbwirkung herzustellen.

Es ist jedoch nicht zwingend erforderlich, dass die einzelnen Bereiche der Codierung unmittelbar aneinander grenzen oder benachbart sind. Insbesondere in den Fällen, in denen ein mit der Codierung versehener Gegenstand bei der Prüfung schnell bewegt wird, wie beispielsweise bei der maschinellen Prüfung von Banknoten, kann es zweckmäßig sein, die einzelnen Codierungsbereiche mit deutlichem Abstand zueinander anzuordnen. Im Extremfall können einzelne Codierungsbereiche sogar an einander gegenüberliegenden Rändern eines Gegenstandes oder Dokuments angeordnet sein.

Die Verwendung von Druckfarben, die fluoreszierende, den Farbeindruck der Druckfarbe nicht beeinflussende Substanzen enthalten, hat den Vorteil, dass die Codierung unauffällig in ein Druckbild integrierbar ist, indem einzelne Bereiche oder das gesamte Druckbild mit der maschinenlesbaren Druckfarbe gedruckt werden. Insbesondere ist es möglich, eine Codierung in eine homogen wirkende, große Farbfläche zu integrieren, beispielsweise als ein sich von seiner Umgebung visuell nicht unterscheidbarer Barcode. Es ist auch möglich, einen zweidimensionalen Barcode zu erzeugen, wodurch sich die Anzahl unterschiedlicher Codierungsvarianten potenziert.

Wenn die einzelnen Codierungsbereiche visuell nicht voneinander unterscheidbar sein sollen, ist es vorteilhaft, die Codierungsbereiche mit einer gleichfarbigen, opaken, deckenden Druckfarbe zu drucken, wobei die Farbschichtdicken zumindest so dick gewählt werden müssen, dass sie einen einheitlichen Farbeindruck vermitteln.

Als Substratmaterial, auf das die Codierung aufgedruckt wird, kommen alle Materialien in Betracht, die mit dem Stichtiefdruckverfahren bedruckt werden können. Bevorzugt wird so genanntes Sicherheitspapier verwendet. Sicherheitspapier weist nicht nur eine Oberflächenrauigkeit auf, die den Farbübertrag von der Druckplatte auf die Substratoberfläche verbessert, sondern weist außerdem weitere schwer zu fälschende Echtheitsmerkmale, wie beispielsweise Wasserzeichen und Sicherheitsfäden auf.

Nachfolgend wird die Erfindung beispielhaft anhand der begleitenden Zeichnungen erläutert. Darin zeigen:
- Figur 1: eine erfindungsgemäße Codierung in Barcodeform;
- Figur 2: eine erfindungsgemäße Codierung als zweidimensionaler Barcode;
- Figur 3: ausschnittsweise einen Querschnitt durch ein Dokument mit einem Barcode gemäß Figur 2;
- Figur 4a: ein Dokument mit einem vollflächigen Barcode;
- Figur 4b: ausschnittsweise einen Querschnitt durch das Dokument aus Figur 4a;
- Figur 5a: ein Dokument mit einem vollflächigen Barcode;
- Figur 5b: ausschnittsweise einen Querschnitt durch das Dokument aus Figur 5a;
- Figur 6: einen Barcode mit filigranen Signallinien;
- Figur 7a: eine in ein Druckbild integrierte Codierung;
- Figur 7b: ausschnittsweise einen Querschnitt durch ein Substrat mit einem Druckbild gemäß Figur 7a.

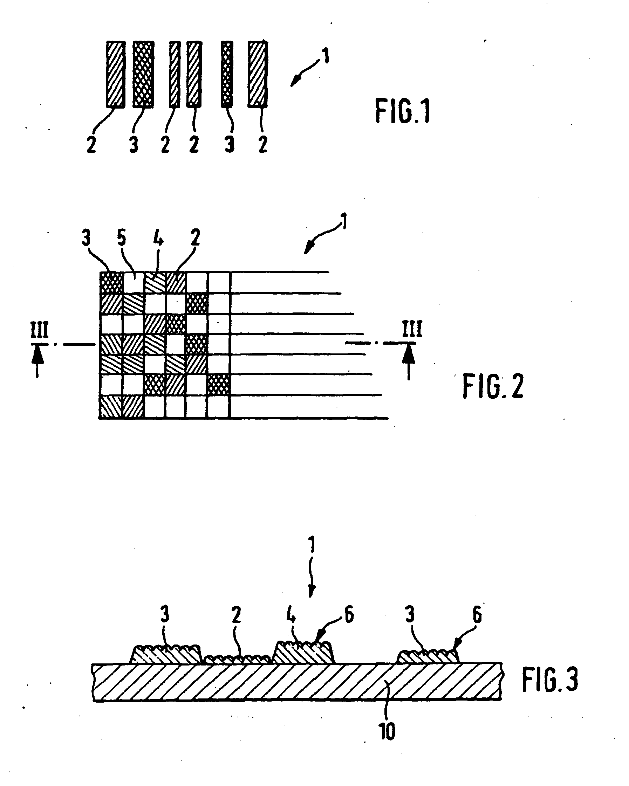

Figur 1 zeigt eine Codierung gemäß einer ersten Ausführungsform der vorliegenden Erfindung in Barcodeform, bestehend aus einer Abfolge von unterschiedlich beabstandeten Balken variabler Breite. Der Barcode ist im Stichtiefdruckverfahren mit einer allen Balken gemeinsamen, lumineszierenden Druckfarbe gedruckt. Einzelne Balken können im Bedarfsfall auch mit abweichenden Druckfarben, insbesondere auch ohne Lumineszenzeigenschaften gedruckt werden. Die Balken 2 unterscheiden sich von den Balken 3 in ihrer Farbschichtdicke. Mit einem geeigneten Sensor, der die in den Farbschichten enthaltenen Lumineszenzstoffe mittels einer geeigneten Anregungsstrahlung erregt und der die Lumineszenzstrahlung mittels einem geeigneten Strahlungsdetektor empfängt, lässt sich der Barcode 1 in jeder Dimension erfassen und decodieren. Die Schichtdicke der einzelnen Balken 2, 3 stellt dabei sozusagen die "dritte Dimension" dar und ist proportional zur detektierten Strahlungsintensität. Ein potentieller Fälscher würde diese dritte Dimension nicht ohne weiteres erwarten und daher auch nicht ohne weiteres entdecken.

In Figur 2 ist eine weitere Ausführungsform einer erfindungsgemäßen Codierung als zweidimensionaler Barcode dargestellt. Die einzelnen Codierungsbereiche sind quadratisch ausgebildet, können aber jede beliebige Form besitzen und müssen auch nicht notwendigerweise in einem regelmäßigen Raster liegen. Der zweidimensionale Barcode besitzt freie Bereiche 5 und bedruckte Bereiche 2, 3, 4, wobei die bedruckten Bereiche 2, 3, 4 wiederum mit derselben Druckfarbe im Stichtiefdruckverfahren in einem einzigen Druckdurchgang gedruckt sind und sich in ihrer Farbschichtdicke voneinander unterscheiden.

In Figur 3 ist die Codierung 1 aus Figur 2 auf einem Dokument 10 im Schnitt entlang der Linie III - III dargestellt. Man erkennt, dass sich die Codierungsbereiche 2, 3, 4 in ihrer Farbschichtdicke voneinander unterscheiden. Die Codierungsbereiche sind darüber hinaus klar voneinander abgegrenzt, indem die Farbschichtdicke von aneinander grenzenden Codierungsbereichen in der jeweiligen Grenzlinie ein Minimum durchläuft. Außerdem besitzen die Oberflächen der Farbschichten der jeweiligen Codierungsbereiche eine Feinstruktur 6, die davon herrührt, dass die Grundfläche des zugehörigen Gravurbereichs der Druckplatte, mit der die Codierung gedruckt wird, eine entsprechende Feinstruktur in Form von Trennstegen besitzt. Wie eingangs erläutert, lassen sich mittels der Trennstegtechnik aneinander grenzende, farblich homogen erscheinende Codierungsbereiche mit großen Abmessungen von deutlich über 1 Quadratmillimeter Fläche und einer Kantenlänge von über 0,5 mm in der in Figur 3 dargestellten Art und Weise erzeugen.

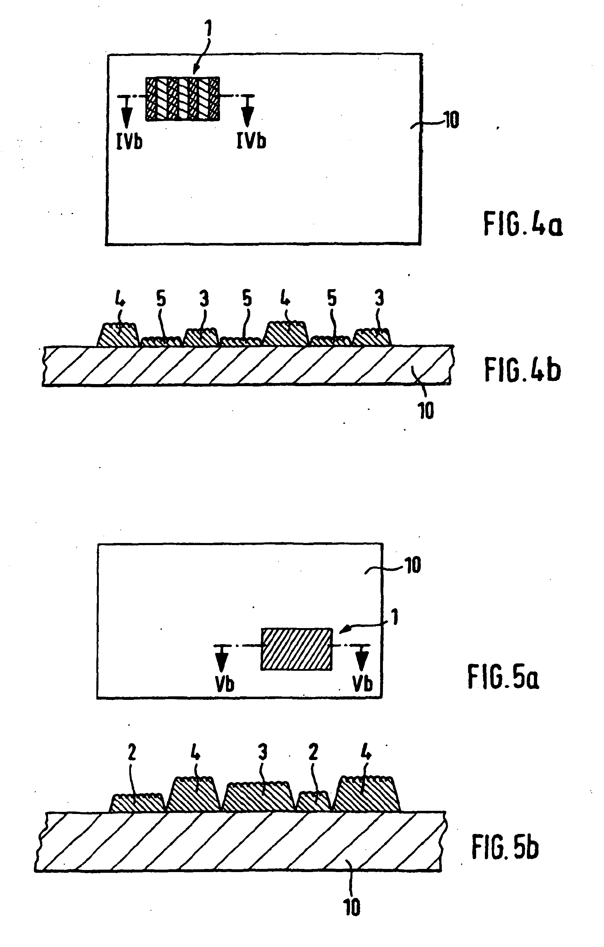

In Figur 4a ist ein Dokument 10 mit einer Codierung 1 in Form eines mit lumineszierender Farbe aufgedruckten Barcodes dargestellt. Der Barcode ist vollflächig ausgebildet, das heißt, die Bereiche zwischen den Balken sind ebenfalls mit einer Farbschicht aus derselben lumineszierenden Farbe bedruckt, die sich allerdings aufgrund ihrer geringen Opazität und geringen Schichtstärke visuell gut von den Balken unterscheiden lässt. In Figur 4b ist das Dokument aus Figur 4a ausschnittsweise im Querschnitt dargestellt, und die unterschiedlichen Schichtdicken lassen sich erkennen. Die dünn bedruckten Zwischenbereiche 5 zwischen den Balken 3, 4 besitzen alle dieselbe Schichtdicke und werden daher bei der maschinellen Auswertung des Messsignals als Abstand zwischen den eigentlichen, den Balkencode bildenden Balken 3, 4 gewertet. Die Schichtdicken der die Codierung bildenden Balken 3, 4 sind so groß gewählt, dass sie eine maximale Farbsättigung aufweisen und deshalb optisch denselben Farbeindruck erzeugen und für den potentiellen Fälscher somit nicht ohne weiteres unterscheidbar sind. Die Balken 3, 4 sind in diesem Falle gleichmäßig beabstandet, so dass ein potentieller Fälscher zunächst annehmen wird, er habe ein regelmäßiges Hell-Dunkel-Raster vor sich. Die geheimzuhaltende Information ist vielmehr durch Variation der Schichtdicken der einzelnen Balken 3, 4 codiert. Nur mittels eines geeigneten Sensors lassen sich die Balken 3, 4 anhand ihrer unterschiedlichen Lumineszenzstrahlungsintensität differenzieren.

In Figur 5a ist eine weitere Ausführungsform der Erfindung dargestellt. Auch hier handelt es sich bei der Codierung 1 wieder um einen Balkencode, wie dem ausschnittsweisen Querschnitt gemäß Figur 5b zu entnehmen ist. In Draufsicht (Figur 5a) sind die einzelnen Balken auf dem Dokument 10 aber nicht voneinander zu unterscheiden, da die gewählte Druckfarbe opak ist und in allen Codierungsbereichen 2, 3, 4 mit einer solchen Mindestschichtdicke vorliegt, dass ihr visueller Farbeindruck identisch ist. Der Betrachter sieht somit eine homogene Farbfläche vor sich, obwohl ihm ein Balkencode vorliegt, dessen Balken sich hier nicht nur in ihren Farbschichtdicken, sondern auch in ihren Breitenabmessungen voneinander unterscheiden. Dementsprechend variiert das Messsignal sowohl bezüglich des Intensitätsniveaus als auch bezüglich der Signaldauer je Intensitätsniveau, wenn die Codierung während der Messung mit gleichmäßiger Geschwindigkeit an einem Sensor vorbeigeführt wird.

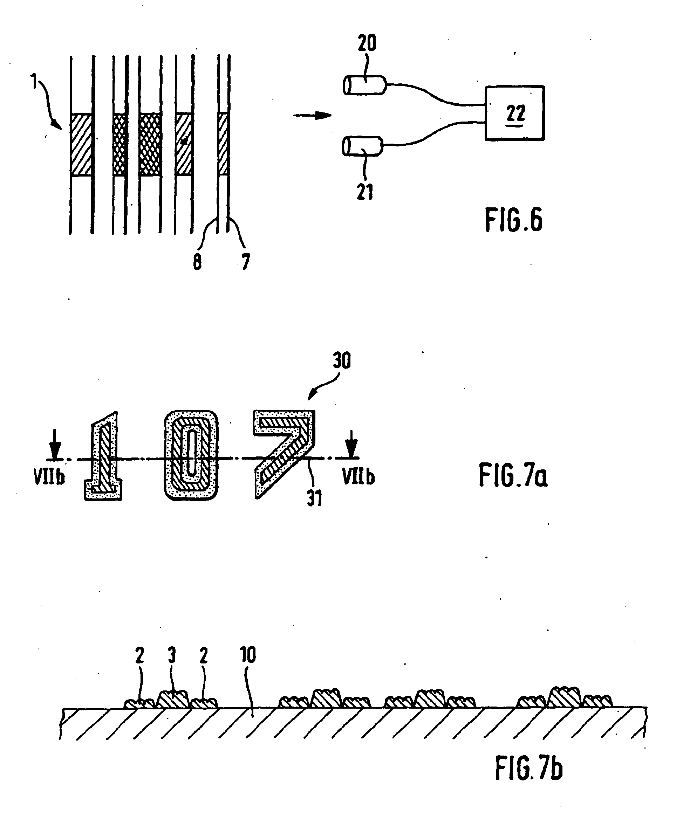

Figur 6 zeigt eine weitere Ausgestaltung der in Bezug auf Figur 1 bereits beschriebenen Ausführungsform der Erfindung, wonach die Codierung 1 als Balkencode mit Balken unterschiedlicher Farbschichtdicke gedruckt ist. Demnach sind der Beginn eines Balkens und das Ende eines Balkens jeweils mit filigranen Signallinien 7 bzw. 8 gekennzeichnet, die in einem Druckvorgang mit derselben Gravurplatte erzeugt werden wie der Barcode selbst. Dadurch, dass die Gravurbereiche für die Codierung 1 und für die Signallinien 7, 8 mit derselben Druckplatte erzeugt werden, ist sichergestellt, dass die Codierung 1 und die Signallinien 7, 8 exakt zueinander ausgerichtet sind. Ein mit einem derartigen Druck versehenes Dokument kann daher visuell daraufhin überprüft werden, ob die Ausrichtung der Signallinien 7, 8 zu den Balken der Codierung 1 passergenau verlaufen.

Die Signallinien 7, 8 haben aber noch eine zweite Funktion. Denn auch die Signallinien 7, 8 sind mit einer Merkmalsstoffe enthaltenden Druckfarbe gedruckt und daher maschinenlesbar und können von einem Sensor 20 detektiert werden, der somit den Beginn und das Ende eines jeden Barcodebalkens detektiert, wenn die Codierung in Pfeilrichtung unter dem Sensor 20 hinwegbewegt wird. Der Barcode selbst wird mittels einem zweiten Sensor 21 detektiert und in einer mit den Sensoren 20, 21 verbundenen Auswerteeinrichtung 22 wird geprüft, ob die vom Sensor 20 detektierte Taktung mit der Abfolge der vom Sensor 21 detektierten Barcodebalken korreliert.

In Figur 7a ist ein weiteres Ausführungsbeispiel der Erfindung dargestellt, bei der die Codierung in einem Druckbild 30 integriert ist. In dem dargestellten Ausführungsbeispiel handelt es sich bei dem Druckbild 30 um eine Ziffernfolge, wobei jede Ziffer einen die Ziffer umgebenden Rahmen besitzt. Wie im Zusammenhang mit den vorherigen Ausführungsbeispielen erläutert, können durch geeignete Farbwahl und Farbschichtdickeneinstellung der Rahmen und die von dem Rahmen umgebene Ziffer visuell nicht unterscheidbar sein. Indem aber die Schichtdicken der Ziffern und/oder der die Ziffern umgebenden Rahmen unterschiedlich sind, besitzt das Druckbild eine nur maschinell lesbare Codierung.

Betrachtet man beispielsweise ein mit dem Druckbild 30 versehenes Substrat entlang einer Messspur 31 im Querschnitt, wie in Figur 7b dargestellt, so ergibt sich eine charakteristische Anordnung von Druckbereichen 2, 3 mit unterschiedlich hoher Farbschichtdicke. Die Codierung wird durch diese Schichtdickenabfolge gebildet und kann bei Verwendung einer lumineszierenden Druckfarbe mittels einem geeigneten Sensor erfasst und ausgewertet werden.

Obwohl ein besonderer Vorteil der Erfindung darin besteht, dass zur Erzeugung der Codierung nur eine einzige Druckfarbe mit lumineszierenden Eigenschaften notwendig ist, kann die Verwendung unterschiedlicher Druckfarben auch Vorteile bieten. Mittels Schabloneneinfärbung lassen sich beispielsweise Bereiche im Umfeld der eigentlichen Codierung mit einer insbesondere visuell gleichen Druckfarbe, jedoch ohne Merkmalsstoffe bedrucken. Dadurch wird einerseits die Lage der Codierung auf dem Dokument verschleiert und andererseits lässt sich eine solche Codierung schwieriger fälschen, da beim Versuch, Codierung und Umfeld durch zwei getrennte Druckvorgänge nachzubilden, der Aufdruck der Codierung mit der den Merkmalsstoff enthaltenden Druckfarbe exakt passergenau sein müsste zu dem Aufdruck des Umfelds mit einer normalen Druckfarbe. Die erforderliche Exaktheit ist mit zwei aufeinander folgenden Druckvorgängen jedoch nicht erreichbar.

## Patentansprüche

1. Im Stichtiefdruckverfahren erzeugte Codierung (1) aus lumineszierender Druckfarbe, wobei sich die Codierung aus Codierungsbereichen (2, 3, 4) mit unterschiedlicher Druckfarbschichtdicke zusammensetzt, und wobei die Druckfarbe der unterschiedlich dick gedruckten Codierungsbereiche maschinell detektierbare Substanzen enthält, so dass die Signalintensität mit zunehmender Farbschichtdicke steigt oder abnimmt.

2. Codierung nach Anspruch 1, wobei die Druckfarbe fluoreszierend ist.

3. Codierung nach Anspruch 1 oder 2, wobei die Druckfarbe phosphoreszierend ist.

4. Codierung nach einem der Ansprüche 1 bis 3, wobei die Codierungsbereiche (2, 3, 4) in ein Druckbild (30) integriert sind.

5. Codierung nach einem der Ansprüche 1 bis 4, wobei die Codierung (1) einen Barcode bildet.

6. Codierung nach Anspruch 5, wobei der Barcode ein zweidimensionaler Barcode ist.

7. Codierung nach einem der Ansprüche 1 bis 6, wobei die Druckfarbe von zumindest einzelnen, sich in der Farbschichtdicke unterscheidenden Codierungsbereichen (2, 3, 4) gleichfarbig opak und deckend ist und in einer solchen Farbschichtdicke vorliegt, dass diese einzelnen Codierungsbereiche visuell nicht differenzierbar sind.

8. Codierung nach einem der Ansprüche 1 bis 7, wobei die Farbschichtdicke im Bereich der Grenzlinie zwischen aneinander grenzenden Codierungsbereichen (2, 3, 4) ein Minimum durchläuft.

9. Codierung nach einem der Ansprüche 1 bis 8, wobei zumindest einzelne Codierungsbereiche (2, 3, 4) ein Oberflächenrelief mit einer Feinstruktur (6) aufweisen.

10. Codierung nach einem der Ansprüche 1 bis 9, wobei alle Codierungsbereiche (2, 3,4) mit der gleichen Druckfarbe erzeugt sind.

11. Codierung nach einem der Ansprüche 1 bis 10, wobei zumindest einzelne Codierungsbereiche von Druckfarbe umgeben sind, die sich von der Druckfarbe der Codierung visuell nicht unterscheiden lässt, die aber nicht lumineszierend ist.

12. Wert- oder Sicherheitsdokument, umfassend eine Codierung nach einem der Ansprüche 1 bis 11.

13. Wert- oder Sicherheitsdokument nach Anspruch 12, wobei es sich um ein aus folgender Gruppe von Dokumenten ausgewähltes Dokument handelt: Ausweis, Pass, Warensicherungsetikett, Banknote, Scheck, Gutschein, Eintrittskarte.

14. Verfahren zum Erzeugen einer Codierung (1) nach einem der Ansprüche 1 bis 11, umfassend die Schritte:
- Zurverfügungstellen eines Substrats (10),
- Erzeugen der Codierung (1) auf dem Substrat (10) durch Aufbringen einer lumineszierenden Druckfarbe im Stichtiefdruckverfahren derart, dass die Codierung (1) aus Codierungsbereichen (2, 3, 4) mit unterschiedlicher Druckfarbschichtdicke besteht, wobei die Druckfarbe der unterschiedlich dick gedruckten Codierungsbereiche maschinell detektierbare Substanzen enthält, so dass die Signalintensität mit zunehmender Farbschichtdicke steigt oder abnimmt.

15. Verfahren nach Anspruch 14, wobei die Codierung (1) einen integralen Bestandteil eines Druckbildes (30) bildet.

16. Verfahren nach einem der Ansprüche 14 bis 15, wobei die Codierung in Form eines Barcodes erzeugt wird.

17. Verfahren nach Anspruch 16, wobei der Barcode ein zweidimensionaler Barcode ist.

18. Verfahren nach einem der Ansprüche 14 bis 17, wobei die Druckfarbe für zumindest einzelne, sich in der Farbschichtdicke unterscheidende Codierungsbereiche (2,3,4) gleichfarbig opak und deckend gewählt und in einer solchen Farbschichtdicke aufgebracht wird, dass die einzelnen Codierungsbereiche (2, 3, 4) visuell nicht differenzierbar sind.

19. Verfahren nach einem der Ansprüche 14 bis 18, wobei die Farbschichtdicke so ausgebildet wird, dass sie im Bereich der Grenzlinie zwischen aneinander grenzenden Codierungsbereichen (2, 3, 4) ein Minimum durchläuft.

20. Verfahren nach einem der Ansprüche 14 bis 19, wobei zumindest bei einzelnen Codierungsbereichen die Farbschichtdicke so erzeugt wird, dass die Farbschicht ein Oberflächenrelief mit einer Feinstruktur (6) aufweist.

21. Verfahren nach einem der Ansprüche 14 bis 20, wobei alle Codierungsbereiche (2, 3,4) mit der gleichen Druckfarbe erzeugt werden.

22. Verfahren nach einem der Ansprüche 14 bis 21, wobei zumindest angrenzend an einzelne Codierungsbereiche Druckfarbe gedruckt wird, die sich von der Druckfarbe des angrenzenden Codierungsbereichs visuell nicht unterscheiden lässt, die aber nicht lumineszierend ist.

23. Verfahren nach einem der Ansprüche 14 bis 22 zur Herstellung eines Wert- oder Sicherheitsdokuments nach einem der Ansprüche 12 oder 13, wobei das Substrat 10 durch das Wert- oder Sicherheitsdokument selbst oder durch ein Zwischenprodukt zur Herstellung des Wert- oder Sicherheitsdokuments gebildet wird.

24. Verfahren nach einem der Ansprüche 14 bis 23, **dadurch gekennzeichnet, dass** die Codierung in einem einzigen Druckdurchgang erzeugt wird.

## Claims

1. A coding (1) produced by intaglio printing and consisting of luminescent and/or electroconductive and/or x-ray absorbing and/or infrared radiation absorbing printing ink, wherein the coding is composed of coding areas (2, 3, 4) with different ink layer thickness, and wherein the printing ink of the coding areas printed in different thickness contains machine detectable substances, so that the signal intensity increases or decreases with increasing ink layer thickness.

2. A coding according to claim 1, wherein the printing ink is fluorescent.

3. A coding according to claim 1 or 2, wherein the printing ink is phosphorescent.

4. A coding according to any of claims 1 to 3, wherein the coding areas (2, 3, 4) are integrated into a printed image (30).

5. A coding according to any of claims 1 to 4, wherein the coding (1) forms a bar code.

6. A coding according to claim 5, wherein the bar code is a two-dimensional bar code.

7. A coding according to any of claims 1 to 6, wherein the printing ink of at least individual coding areas (2, 3, 4) differing in ink layer thickness is the same color, opaque and covering, and present in an ink layer thickness such that said individual coding areas are visually undifferentiable.

8. A coding according to any of claims 1 to 7, wherein the ink layer thickness traverses a minimum in the area of the boundary line between adjacent coding areas (2, 3, 4).

9. A coding according to any of claims 1 to 8, wherein at least individual coding areas (2, 3, 4) have a surface relief with a fine structure (6).

10. A coding according to any of claims 1 to 9, wherein all coding areas (2, 3, 4) are produced with the same printing ink.

11. A coding according to any of claims 1 to 10, wherein at least individual coding areas are surrounded by printing ink that is visually indistinguishable from the printing ink of the coding but is not luminescent or electroconductive or infrared radiation or x-radiation absorbing.

12. A document of value or security document comprising a coding according to any of claims 1 to 11.

13. A document of value or security document according to claim 12, wherein it is a document selected from the following group of documents: identity card, passport, security label for goods, bank note, check, voucher, admission ticket.

14. A method for producing a coding (1) according to any of claims 1 to 11, comprising the steps of:
- providing a substrate (10),
- producing the coding (1) on the substrate (10) by applying a luminescent and/or electroconductive and/or x-radiation absorbing and/or infrared radiation absorbing printing ink by intaglio printing in such a way that the coding (1) consists of coding areas (2, 3, 4) with different ink layer thickness, whereby the printing ink of the coding areas printed in different thickness contains machine detectable substances, so that the signal intensity increases or decreases with increasing ink layer thickness.

15. A method according to claim 14, wherein the coding (1) forms an integral part of a printed image (30).

16. A method according to any of claims 14 to 15, wherein the coding is produced in the form of a bar code.

17. A method according to claim 16, wherein the bar code is a two-dimensional bar code.

18. A method according to any of claims 14 to 17, wherein the printing ink is selected to be the same color, opaque and covering for at least individual coding areas (2, 3, 4) differing in ink layer thickness, and is applied in an ink layer thickness such that the individual coding areas (2, 3, 4) are visually undifferentiable.

19. A method according to any of claims 14 to 18, wherein the ink layer thickness is formed so as to traverse a minimum in the area of the boundary line between adjacent coding areas (2, 3, 4).

20. A method according to any of claims 14 to 19, wherein the ink layer thickness is produced at least in individual coding areas in such a way that the ink layer has a surface relief with a fine structure (6).

21. A method according to any of claims 14 to 20, wherein all coding areas (2, 3, 4) are produced with the same printing ink.

22. A method according to any of claims 14 to 21, wherein at least adjacent to individual coding areas, printing ink is printed that is visually indistinguishable from the printing ink of the adjacent coding area but is not luminescent or electroconductive or x-ray absorbing or infrared absorbing.

23. A method according to any of claims 14 to 22 for producing a document of value or security document according to any of claims 12 or 13, wherein the substrate (10) is formed by the document of value or security document itself or by an intermediate product for producing the document of value or security document.

24. A method according to any of claims 14 to 23, **characterized in that** the coding is produced in a single printing pass.

## Revendications

1. Codage (1) réalisé avec un procédé de taille douce au moyen d'une encre d'impression luminescente, le codage se composant de zones de codage (2, 3, 4) avec une épaisseur différente de la couche d'encre d'impression, et l'encre d'impression des zones de codage imprimées avec des épaisseurs différentes contenant des substances pouvant être détectées par une machine, de sorte que l'intensité des signaux augmente ou diminue avec l'augmentation de l'épaisseur de la couche d'encre.

2. Codage selon la revendication 1, dans lequel l'encre d'impression est fluorescente.

3. Codage selon la revendication 1 ou 2, dans lequel l'encre d'impression est phosphorescente.

4. Codage selon l'une quelconque des revendications 1 à 3, dans lequel les zones de codage (2, 3, 4) sont intégrées dans un dessin d'impression (30).

5. Codage selon l'une quelconque des revendications 1 à 4, dans lequel le codage (1) forme un code à barres.

6. Codage selon la revendication 5, dans lequel le code à barres est un code à barres bidimensionnel.

7. Codage selon l'une quelconque des revendications 1 à 6, dans lequel l'encre d'impression de zones de codage (2, 3, 4) au moins individuelles et se différenciant dans l'épaisseur de la couche d'encre est de même couleur, opaque et couvrante et est appliquée avec une épaisseur telle de la couche d'encre que ces différentes zones de codage ne peuvent pas être différenciées visuellement.

8. Codage selon l'une quelconque des revendications 1 à 7, dans lequel, dans la zone de la ligne de séparation entre des zones de codage (2, 3, 4) qui sont limitrophes, l'épaisseur de la couche d'encre passe par un minimum.

9. Codage selon l'une quelconque des revendications 1 à 8, dans lequel au moins des zones de codage individuelles (2, 3, 4) comprennent un relief de surface avec une structure fine (6).

10. Codage selon l'une quelconque des revendications 1 à 9, dans lequel toutes les zones de codage (2, 3, 4) sont réalisées avec la même encre d'impression.

11. Codage selon l'une quelconque des revendications 1 à 10, dans lequel au moins des zones de codage individuelles sont entourées par de l'encre d'impression qui ne peut pas être différenciée visuellement de l'encre d'impression du codage, mais qui n'est pas luminescente..

12. Document de valeur ou de sécurité comprenant un codage selon l'une quelconque des revendications 1 à 11.

13. Document de valeur ou de sécurité selon la revendication 12, **caractérisé en ce qu'**il s'agit d'un document sélectionné dans le groupe de documents comprenant les cartes d'identité, les passeports, les étiquettes de protection de marchandises, les billets de banque, les chèques, les bons à valoir et les billets d'entrée.

14. Procédé pour réaliser un codage (1) selon l'une quelconque des revendications 1 à 11 comprenant lez étapes suivantes :
- mise à disposition d'un substrat (10) et
- réalisation du codage (1) sur le substrat (10) par application au moyen d'un procédé de taille douce d'une encre d'impression luminescente, et ceci de telle façon que le codage (1) se compose de zones de codage (2, 3, 4) avec des épaisseurs différentes de la couche d'encre d'impression, l'encre d'impression des zones de codage imprimées avec des épaisseurs différentes contenant des substances pouvant être détectées par une machine, de sorte que l'intensité des signaux augmente ou diminue avec l'augmentation de l'épaisseur de la couche d'encre.

15. Procédé selon la revendications 14, dans lequel le codage (1) forme une partie constituante intégrale d'une image d'impression (30).

16. Procédé selon l'une quelconque des revendications 14 à 15, dans lequel le codage est réalisé sous la forme d'un code à barres.

17. Procédé selon la revendication 16, dans lequel le code à barres est un code à barres bidimensionnel.

18. Procédé selon l'une quelconque des revendications 14 à 17, dans lequel l'encre d'impression pour des zones de codage (2, 3, 4) au moins individuelles et se différenciant dans l'épaisseur de la couche d'encre est choisie pour être de même couler, opaque et couvrante et est appliquée avec une épaisseur telle de la couche d'encre que les différentes zones de codage (2, 3, 4) ne peuvent pas être différenciées visuellement.

19. Procédé selon l'une quelconque des revendications 14 à 18, dans lequel l'épaisseur de la couche d'encre est configurée de telle façon qu'elle passe par un minimum dans la zone de la ligne de séparation entre des zones de codage (2, 3, 4) qui sont limitrophes.

20. Procédé selon l'une quelconque des revendications 14 à 19, dans lequel au moins dans le cas de certaines zones de codage individuelles, l'épaisseur de la couche d'encre est réalisée de telle façon que la couche d'encre comprenne un relief de surface avec une structure fine (6).

21. Procédé selon l'une quelconque des revendications 14 à 20, dans lequel toutes les zones de codage (2, 3, 4) sont réalisées avec la même encre d'impression.

22. Procédé selon l'une quelconque des revendications 14 à 21, dans lequel au moins à la limite avec des zones de codage individuelles est imprimée de l'encre d'impression qui ne peut pas être différenciée visuellement de l'encre d'impression de la zone de codage limitrophe, mais qui n'est pas luminescente.

23. Procédé selon l'une quelconque des revendications 14 à 22 pour la réalisation d'un document de valeur ou de sécurité selon l'une quelconque des revendications 12 ou 13, dans lequel le substrat (10) est formé par le document de valeur ou de sécurité lui-même ou par un produit intermédiaire servant à la fabrication du document de valeur ou de sécurité.

24. Procédé selon l'une quelconque des revendications 14 à 23, dans lequel le codage est réalisé par un seul passage d'impression.
